# EUROPEAN PATENT SPECIFICATION

(11) **EP 4 180 776 B1**
(45) Date of publication and mention of the grant of the patent: **24.07.2024**
(21) Application number: 22205843.0
(22) Date of filing: 07.11.2022
(51) Int. Cl.: G01F 23/00, G01F 23/32

(54) **DEVICE FOR DETECTING AT LEAST ONE LEVEL OF A FLUID OF A TANK**
VORRICHTUNG ZUR ERFASSUNG MINDESTENS EINES FÜLLSTANDS EINES FLUIDS EINES TANKS
DISPOSITIF DE DÉTECTION D'AU MOINS UN NIVEAU D'UN FLUIDE D'UN RÉSERVOIR

(30) Priority: 10.11.2021 IT 202100028535
(43) Date of publication of application: 17.05.2023
(73) Proprietor: Raddi, Enrico, 50143 Firenze (IT); Raddi, Lorenzo, 50143 Firenze (IT)
(72) Inventor: Raddi, Enrico, 50143 Firenze (IT); Raddi, Lorenzo, 50143 Firenze (IT)
(74) Representative: Firmati, Leonardo

(56) References cited:
- DE-A1- 102012 002 115
- US-A1- 2013 180 329
- US-A1- 2017 138 776

## Description

This invention relates to a device for detecting at least one level of a fluid of a tank.

There are currently prior art pumps, used in tanks, such as, for example, wells, clear water chambers, waste water chambers, tanks for moving or draining fluids in general. These prior art pumps are advantageously used, for example, when it is necessary to bring the contents of a tank to a height greater than that of the tank itself, since it is not possible to exploit the falling of the fluid by gravity.

Moreover, these pumps are, for example, used to control the filling level of a tank.

In this regard, the prior art devices for detecting the level of fluid of a tank, in the case of pumps, are equipped with floating switches.

These switches are activated when a threshold value of the level of fluid inside the tank is reached.

These solutions, however, have the drawback of not being able to be applied to situations in which it is necessary to have a monitoring of different levels of the fluid contained in a tank.

In this regard, prior art solutions use two or more pumps, each of which is equipped with a relative float switch.

Each pump, with its float, is positioned at different levels.

In use, depending on the level reached by the fluid in the tank, the corresponding pump is activated.

Or in order to simultaneously activate several pumps, there are several floats, one for each pump, at the same level of fluid.

These solutions are used, for example, to create redundancies in systems which require safety devices, in order to guarantee that at least one pump is activated if a first pump fails to activate.

Further prior art solutions comprise the use of a single pump equipped with several floats, which can be activated simultaneously or at different fluid levels.

These solutions, precisely because they involve the use of several floats have the disadvantage of not being able to be applied in situations in which the tanks have reduced dimensions.

In such situations, in fact, inserting more floats inside the tank may be prohibitive.

If the pumps used are, for example, immersion pumps, which, as such, require insertion into the tank itself, the useful volume of the tank for receiving the fluid reduces considerably, thus also compromising the correct operation of the pump or the pumps used.

There are also prior art solutions in which a floating body is used equipped with a rod which is able to activate several magnetic sensors positioned in sequence.

This solution has the drawback of requiring large dimensions of the float, and consequently of the tank, especially in terms of the length of the tank.

In effect, the dimensions of these devices are large in order to allow the rod to detect the various levels of the fluid and to be contained in the tank during the excursion of the rod.

DE 10 2012 002115 A1 proposes a device for detecting at least one level of a fluid of a tank, including a floating body and a single orientation sensor constrained in a fixed position to said floating body, allowing for determination of an inclination value associated to the orientation of the float's axis.

The aim of the invention is therefore to provide a device for detecting at least one level of a fluid of a tank designed to at least partly overcome the above-mentioned technical drawbacks.

Yet another aim is to provide a device for detecting at least one level of a fluid of a tank which is practical to use and install and simple and inexpensive to make. According to the invention, these aims and others are achieved by a device for detecting at least one level of a fluid of a tank comprising the technical features described in the accompanying claims.

The technical features of the invention, with reference to the above-mentioned aims, are clearly described in the appended claims and its advantages are apparent from the detailed description which follows, with reference to the accompanying drawings which illustrate purely non-limiting example embodiments of the invention, in which:
- Figure 1 is a schematic side view of an embodiment of the device for detecting at least one level of a fluid of a tank according to the invention;
- Figure 2 is a schematic side elevation view of an internal section of the device of Figure 1;
- Figure 3 is a schematic view from above of the device of Figure 1;
- Figure 4 is a schematic side view in cross section of a second embodiment of the device for detecting at least one level of a fluid of a tank according to the invention in a first configuration of use;
- Figure 5 is a schematic side view in cross section of the device of Figure 5 according to a second configuration of use;
- Figure 6 is a schematic side view in cross section of the device of Figure 4 according to a third configuration of use;
- Figure 7 is a schematic side view of the device of Figure 4 according to a fourth configuration of use;
- Figure 8 is a schematic side view in cross section of the device of Figure 4 according to a fifth configuration of use;
- Figure 9 is a schematic perspective view of a device according to the invention connected to a respective movement brace.

With reference to the accompanying drawings, the numeral 1 denotes in its entirety a device for detecting at least one level L of a fluid F of a tank, and made according to the invention.

The term "fluid F" means both water, either clean or derived from previous processing operations, such as, for example, water from sewers, and oils or oily substances such as, for example, diesel oil.

The term "fluid F" also means a substance or a mixture mainly in the form of a liquid, although the presence of solid or gaseous substances in the fluid F is not excluded.

The term "tank" means a container, of any shape or size, designed to contain the fluid F.

For the sake of simplicity, the tank is not illustrated in the accompanying drawings.

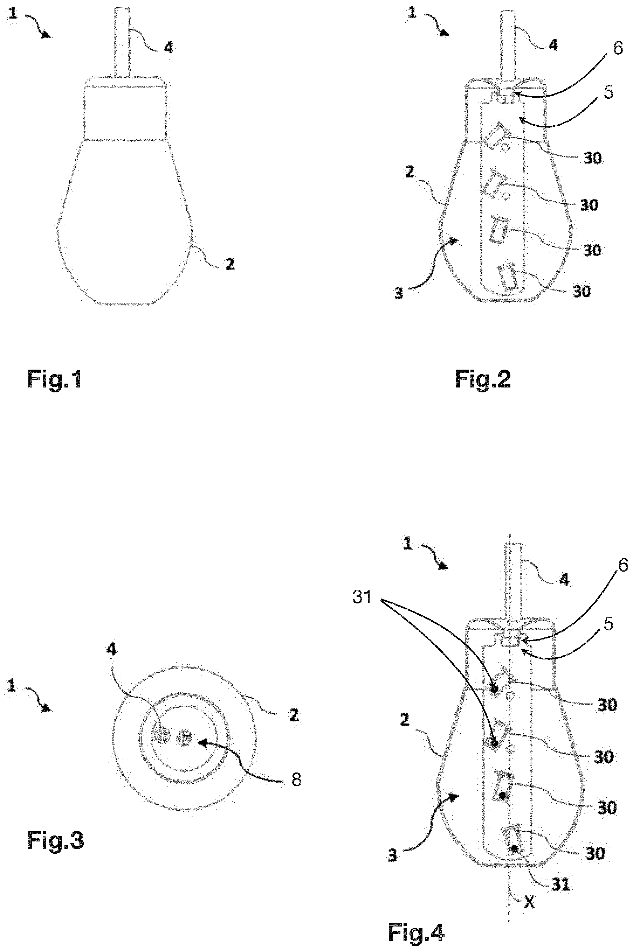

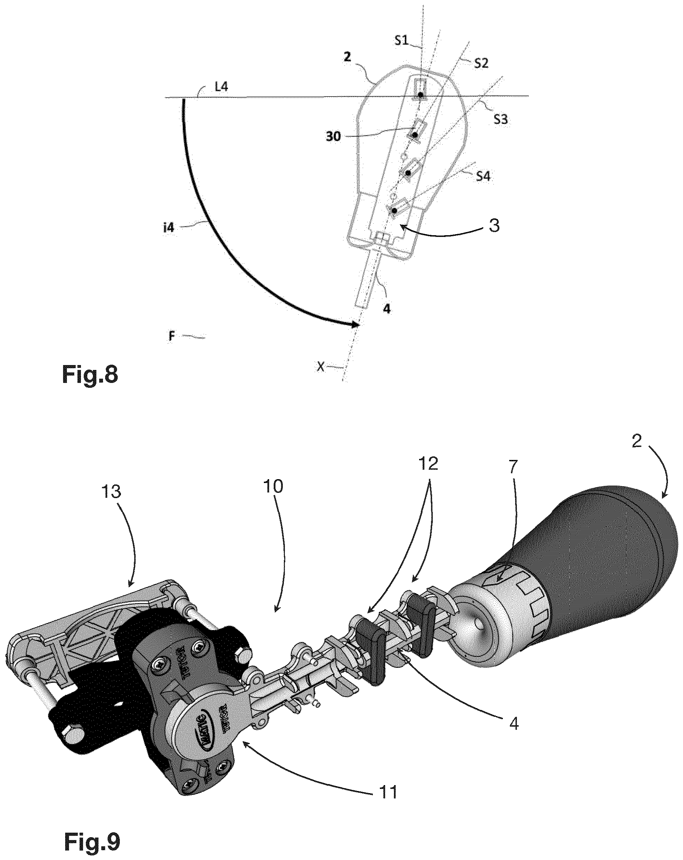

With reference to Figures 1 to 3, the device 1 comprises a floating body 2, a plurality of orientation sensors 30, and a command unit, not illustrated in the drawings. As shown in the drawings, and in particular in Figure 4, the floating body 2 comprises on one end of it a connecting protrusion 4 configured to connect the floating body 2 to an external support means 10, for example a brace (shown in Figure 9) comprising a hinge 11 and designed to allow movement of the floating body 2 only on a single plane, advantageously perpendicular to the plane corresponding to the level L of the calm fluid on which the floating body 2 floats.

The correct operating plane of the device 1 according to the invention is the perpendicular plane passing through the axis X of the floating body 2, with respect to the plane defined by the free surface of the fluid F at rest. The external support means 10 advantageously comprise a portion 13 configured to engage on a fixed part of the tank containing the fluid.

The term "fixed part" of the tank means a part of it or a pipe positioned inside it or any accessory such as, for example, the main body of the pump.

The protrusion 4 has a non-circular cross section, advantageously polygonal, for example hexagonal or octagonal.

Advantageously, the polygonal cross-section of the protrusion 4 is shaped to match respective fixing means 12 of the support means 10.

This guarantees that the orientation between the support means 10 and the floating body 2 is kept fixed during operation and throughout the entire life cycle of the device 1.

In order to obtain, during installation, the correct orientation between the floating body 2 (therefore also of the sensors 30) and respective support means 10, the floating body 2 has a visual signalling element 7, indicating the correct position of the body 2 with respect to the plane corresponding to the level L of the fluid F of the tank.

The signalling element, for example, indicates the portion of the body 2 which must be positioned as an upper part when installed on the support means 10.

The mutual positioning is clearly of fundamental importance for the correct operation of the device 1 since if the sensors 30 are not positioned on the perfect perpendicular to the plane of the fluid these cannot be correctly enabled to the relative inclinations.

More specifically, the floating body 2 has a floating axis X.

The term "floating axis X" is used to mean an axis belonging to the floating plane.

The term "floating plane" means the plane of the floating body 2 coinciding with the plane corresponding to the level L of the calm fluid on which the floating body 2 floats.

The floating plane also represents the horizontal surface of separation between the immersed part and the emersed part of the floating body 2.

Advantageously, the device 1 comprises a single floating body 2.

The single floating body 2 is advantageously hollow for housing the plurality of orientation sensors 30.

In particular, the plurality of sensors 30 is fixed on a respective support 3 in such a way as to be positioned with respect to it in a fixed manner.

Advantageously, the support 3 comprises an electronic card, that is to say, a printed circuit comprising the various electrical connections of each sensor 30 of the above-mentioned plurality.

The support 3 comprises, on a relative end, coupling means 5 configured to fix the support in a predetermined and unique position of the floating body 2.

The support 3, and, therefore, the sensors 30, is positioned in operation in a plane parallel to that defined above for correct operation of the device 1 according to the invention.

For this purpose, there are further fixing means 6 on the floating body 2, for example to obtain a male-female type interference connection with the coupling means 5 of the support 3.

The support 3, and, therefore, the sensors 30 supported by it, may be positioned in a unique position for fixing inside the floating body 2.

The orientation between the sensors 30 and the floating body 2 is thus predetermined and fixed.

The plurality of orientation sensors 30 is isolated from the fluid F, for the correct operation of the device 1. With reference to the drawings, the floating body 2 is substantially symmetrical in shape except for the position of the above-mentioned connecting protrusion 4. This solution makes it possible to increase the working volume of the single floating body 2, without excessively increasing the dimensions of the floating body 2.

As mentioned, the plurality of orientation sensors 30 is constrained in a fixed position to the floating body 2. The orientation sensors 30, according to embodiments not illustrated, are removably positioned on the respective support 3 to facilitate the maintenance of the sensors 30.

According to other embodiments not illustrated, the position of the sensors 30 on the support 3 is advantageously adjustable, for example to facilitate the calibration of the orientation sensors 30.

According to embodiments not illustrated, the floating body 2 comprises a filling made of an electrically insulating material chosen from among a gel, a cold cross-linked gel, a resin, an epoxy resin, a polyurethane resin, a foam or a combination thereof.

This solution has the advantage of fixing the plurality of orientation sensors 30 and guaranteeing a better insulation of the orientation sensors 30 from the fluid F.

Hereinafter, the term "predetermined level" (L1, L2, L3, L4) means a threshold value reached by the level L of fluid F, established during calibration of the device 1. The expression "predetermined inclination" (i1, i2, i3, i4) means a threshold value reached by the inclination i of the floating axis X with respect to the level L of fluid F.

The threshold inclination values are determined during calibration of the device 1.

The term "calibration" of the device 1 means the step in which the number of orientation sensors 30 is selected and the step in which the threshold inclinations at which the orientation sensors 30 will modify their status are determined.

The number of orientation sensors 30 used advantageously depends on the number of levels L of fluid F to be detected.

The term "modification of the state of a sensor" means a change in the level L of the fluid F detected or undergone by the orientation sensor 30.

The term "signal" means a response sent and/or received to/from an orientation sensor 30, or sent and/or received to/from the command unit.

The signal is, for example, in the form of an electrical signal or the absence of an electrical signal.

The signal is sent by the command unit to change the status of the orientation sensors 30.

The signal is sent to the command unit to change the operating status of an operating device.

The term "operating device" means a device which is able to perform an action.

The operating device is, for example, a pump, a valve, an emergency warning light or a signalling apparatus. Following the modification of the operating status of an operating device, at least one action is performed. More specifically, the actions performed may be of different types and some cases are given by way of a non-limiting example.

The signal sent to the command unit indicates activating one or more pumps.

The signal sent to the command unit indicates the deactivation of a predetermined pump.

The signal sent to the command unit, for example, indicates the signalling of an alarm or emergency status, for example by activating emergency lights.

The signal sent to the orientation sensors 30 indicates, for example, that all the orientation sensors 30 are to be switched off.

The command unit is configured for communicating with the plurality of orientation sensors 30 and for controlling an operating device, not illustrated.

In particular, each sensor 30 of the plurality is configured for sending/receiving a signal to/from the command unit for modifying the operating state of said operating device at a predetermined level (L1, L2, L3, L4) of the fluid (F).

A predetermined level (L1, L2, L3, L4) of the fluid F corresponds to a predetermined inclination (i1, i2, i3, i4) of the axis X with respect to the predetermined level (L1, L2, L3, L4).

That is to say, during calibration of the device 1, certain levels (L1, L2, L3, L4) are established to which a signal to be sent/received to/from the command unit corresponds.

During calibration the type of action to be performed by the operating device following the signal sent/received by/to the command unit is also established.

According to embodiments not illustrated, the device 1 comprises a command unit configured to control the operation of the device, and store the operating data of the various components of the device 1.

The number and type of orientation sensors 30 to be used is chosen according to the number of the certain levels to be detected, and of the corresponding inclinations. There are as many sensors 30 of the plurality as there are levels.

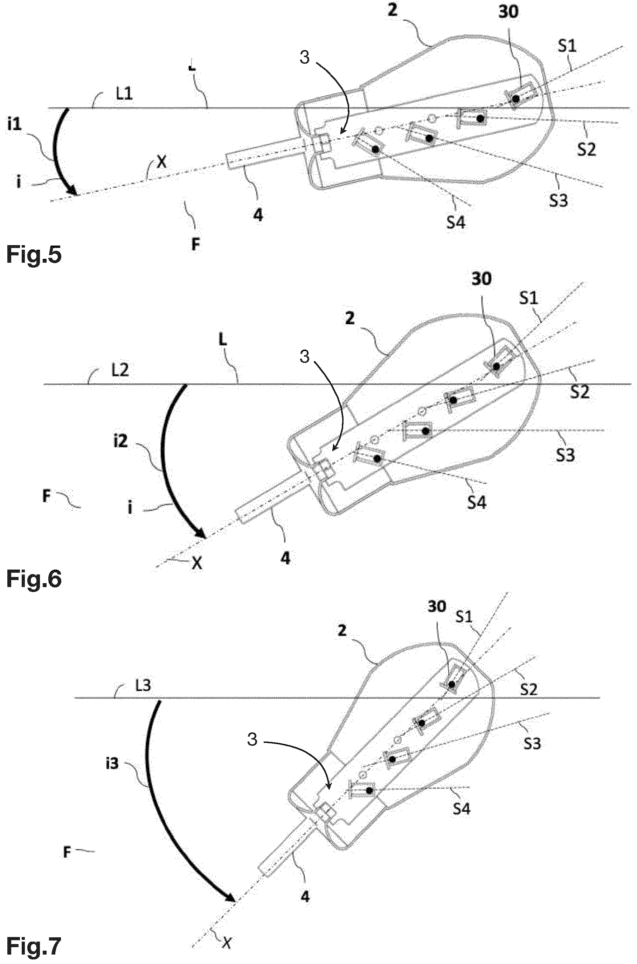

With reference to Figures 5 to 8, the predetermined inclination (i1, i2, i3, i4) of the axis X, determining a modification of the status of the sensors 30, is different for each sensor 30.

That is to say, each orientation sensor 30 is activated or deactivated for a predetermined inclination (i1, i2, i3, i4).

In that way, with a single device 1 according to the invention it is possible to monitor different levels L of the fluid F.

These solutions are, for example, advantageous for actuating several emergency signals, one for each predetermined level (L1, L2, L3, L4) reached by the fluid F.

These solutions are, for example, advantageous for operating several pumps, one at each predetermined level (L1, L2, L3, L4).

The predetermined levels (L1, L2, L3, L4) according to embodiments not illustrated are equal to each other. That is to say, the command unit sends/receives a signal when the predetermined levels (L1, L2, L3, L4) are reached.

In these circumstances, the signal sent to the command unit indicates, for example, that several safety valves are to be actuated for the same level of fluid.

This solution is advantageous when there is need to have several safety valves, to be activated for the same level of fluid F, for example, to create redundancies in emergency systems or lines.

The use of several valves increases the overall reliability of a system, and extends the working life of the valve.

According to other embodiments not illustrated, the command unit sends to a single pump different signals to indicate different actions to be performed at different levels L reached by the fluid F.

For example, a predetermined level L1 indicates a correct operating situation, whilst a level L2 indicates, and therefore activates, an emergency operation of the operating device or orientation sensors 30. Advantageously, the predetermined inclination (i1, i2, i3, i4) of the axis X with respect to the level L of the fluid F is between 0 sexadecimal degrees and 180 sexadecimal degrees.

The range of between 0 and 180 sexadecimal degrees makes it possible to cover the possible significant configurations of the device 1.

The expression "significant configurations of the device 1" means the configurations in which the device may be found following an increase, or decrease, in the level L of a fluid F.

The modification of the state of the sensors 30 occurs in succession in increasing sequences of the predetermined inclination (i1, i2, i3, i4).

That is to say, the sensors 30 are activated or deactivated one after the other.

For example, with reference to Figures 5 to 8, each sensor 30 of the plurality is activated after the activation of the previous one, for certain increasing inclinations (i1, i2, i3, i4).

This situation occurs, for example, if the level L of fluid F increases over time.

According to embodiments not illustrated, the modification of the state of the sensors 30 of the plurality occurs in succession for decreasing sequences of the predetermined inclination (i1, i2, i3, i4).

That is to say, the sensors 30 are activated or deactivated one after the other.

For example, each sensor 30 of the plurality is deactivated after deactivation of the preceding one, for certain decreasing inclinations (i1, i2, i3, i4).

This situation occurs, for example, if the level L of fluid F decreases over time.

The orientation sensors 30 of the plurality are advantageously selected in the group comprising tilt switches, micro-switches, reed switches, magnetic type sensors, mercury ampoule sensors, mechanically operated switches, wireless type orientation sensors, sensors with proportional actuation with the variation of the inclination or a combination thereof.

The term "wireless type orientation sensors" means sensors which are able to communicate remotely with the command unit, thus being able to reduce the wiring necessary for operation of the device 1.

The device 1 comprises a flexible cable configured for electrically connecting the plurality of orientation sensors 30 to the command unit.

The flexible cable is advantageously inserted through an opening 8 made on one end of the floating body 2 as shown in Figure 3.

With reference to the accompanying drawings, the flexible cable inserts in a manner substantially parallel to the floating axis X and to the main axis of the protrusion 4.

Advantageously, the flexible cable fits centrally into the floating body 2, as illustrated in Figure 3.

In use, the device 1 according to the invention is positioned in a tank containing a fluid F with a level L of the fluid F which is variable over time.

A predetermined level (L1, L2, L3, L4) of the fluid F is then established, corresponding to a predetermined inclination (i1, i2, i3, i4) of the axis X, of the single floating body 2 of the device 1, with respect to the predetermined level (L1, L2, L3, L4).

Subsequently, at the predetermined level (L1, L2, L3, L4) the status of a sensor 30 of the plurality of sensors is modified.

A signal is then sent/received to/from the command unit of the detection device at the predetermined level (L1, L2, L3, L4).

That is to say, the action to follow the corresponding signal is established during this step.

The step of modifying the status of a sensor 30 and the step of sending/receiving a signal to/from the command unit for each level L substantially equal to the predetermined level (L1, L2, L3, L4) of the fluid F is repeated several times.

In that way, the various levels of activation/deactivation of the sensors 30, the signals to be sent/received to/from the command unit, and the actions to follow the indications received from the command unit and from the sensors 30, such as, for example, the activation/deactivation of the operating device, are determined.

In use, whilst the level L of fluid F varies over time, the orientation sensors 30 are activated and deactivated to send/receive, or not, signals to/from the command unit.

Figures 4 to 8 illustrate different configurations of use of the device 1, if the level L of fluid F increases over time from a lower level L1 to a higher level L4. Similarly, the inclinations of the floating axis X increase from inclination i1, smallest, to the inclination i4, largest.

Again with reference to Figures 4 to 8, switches are used with mechanical activation, which comprise a locking/unlocking element 31, for example a metal ball, driven by the force of gravity.

The locking/unlocking element 31 acts on a lever, not illustrated, for actuating the switch, also not illustrated, of the sensor 30.

With reference to Figures 5 to 8, the locking/unlocking element 31 of each sensor 30 modifies the relative state at different inclinations of the floating body 2.

This is possible due to the fact that the sensors 30 are positioned with different orientations (S1, S2, S3, S4) with respect to the floating axis X.

From the first configuration illustrated in Figure 4, wherein the device 1 is in the rest configuration, the device 1 moves to a configuration, not illustrated, of static equilibrium, substantially horizontal, when it is immersed in a fluid F.

As the level L of the fluid F increases, the device 1 moves to the configuration illustrated in Figure 5, wherein the level L of fluid F is substantially equal to the predetermined level L1.

According to this configuration only the sensor 30 is activated with orientation S1.

As the level L of the fluid F increases, the device 1 moves to the configuration illustrated in Figure 6, wherein, increasing the volume of the submerged device 1, the hydrostatic thrust which acts on the device 1 is increased, and consequently the inclination of the device 1 increases.

When the level L reaches the predetermined level L2, the sensor 30 is activated with orientation S2.

Continuing to increase the level L of the fluid F, the device 1 reaches the predetermined level L3, wherein the sensor 30 is activated with orientation S3. Subsequently, again increasing the level L of the fluid F, the device 1 reaches the predetermined level L4, wherein the sensor 30 is activated with orientation S4. Similarly, with the decrease in the level L of the fluid F, the sensors 30 are deactivated in sequence, one after the other.

These configurations are not shown in the drawings.

The device according to the invention achieves the preset aims and brings important advantages.

A first advantage of the device according to the invention is the possibility of being able to be used in confined spaces or which require a reduced size of the floating body.

A further advantage consists in the fact that by means of a device 1 according to the invention it is possible to command a plurality of operating devices with a single floating body.

Thanks to the configuration of the device 1 according to the invention, the advantage of not risking an incorrect positioning of the sensors 30 with respect to the floating body 2 is also achieved.

A further advantage of the invention is to provide a device with reduced dimensions in the configuration of use.

Another advantage is due to the fact that the device according to the invention is easily adaptable to different shapes of the floating body.

A further advantage is due to the fact that the device according to the invention is adaptable to different situations of use, whilst maintaining a reduced overall size of the device.

In effect, by modifying the number and orientation of the orientation sensors 30 it is possible to adapt the device 1 to different requirements of use.

Another advantage is due to the fact that the device according to the invention is particularly reliable in different situations of use.

If, in effect, an orientation sensor 30 is not activated, a greater increase in the level of the fluid would activate the next sensor of the sequence, bypassing the malfunction of the previous sensor.

## Claims

1. A device (1) for detecting at least one level (L) of a fluid (F) of a tank, comprising:
- a floating body (2) having a floating axis (X);
- a plurality of orientation sensors (30) constrained in a fixed position to said floating body (2);
- a command unit configured to communicate with said plurality of orientation sensors (30) and to control an operating device, wherein each sensor (30) of said plurality is configured to send a signal to said command unit to change the operating state of said operating device at a certain level (L1, L2, L3, L4) of said fluid (F) corresponding to a determined inclination (i1, i2, i3, i4) of said axis (X) with respect to said certain level (L1, L2, L3, L4),
- a support means (10) operatively connected to said floating body (2) and comprising a hinge (11), said support means (10) being configured to allow movement of said floating body (2) only with respect to a single plane perpendicular to the plane corresponding to said level (L) of said fluid (F) of said tank,
- said floating body (2) comprising at one end a connecting protrusion (4) configured for stably connecting and in a unique position said floating body (2) to said support means (10), wherein
said predetermined inclination (i1, i2, i3, i4) of said axis (X), determining a change of the state of said sensors (30), is different for each sensor (30) of said plurality.

2. The device (1) according to the preceding claim wherein said support means (10) comprises a portion (13) configured to stably attach to a fixed part of said tank.

3. The device (1) according to any one of the preceding claims wherein said protrusion (4) has a polygonal section.

4. The device (1) according to the preceding claim wherein said support means (10) comprises fastening means (12) and said polygonal section of said protrusion (4) is counter-shaped to said fastening means (12) of said support means (10).

5. The device (1) according to any one of the preceding claims wherein said floating body (2) comprises a visual signalling element (7), indicating the correct position of said body (2) itself with respect to said plane corresponding to said level (L) of said fluid (F) of said tank.

6. The device (1) according to any one of the preceding claims further comprising a support (3) disposed in a fixed manner within said floating body (2) and on which said sensors (30) are fixed.

7. The device (1) according to any of the preceding claims wherein said support (3) comprises a printed circuit board comprising the electrical connections of each of said sensors (30).

8. The device (1) according to claim 6 wherein said support (3) comprises on one end thereof coupling means (5) and said floating body (2) comprises fixing means (6), said coupling means (5) being operatively connected to said fixing means (6) and being configured to fix said support (3) in a predetermined and unique position with respect to said floating body (2).

9. The device according to any one of the preceding claims, **characterised in that** said orientation sensors (30) of said plurality are selected from the group comprising tilt switches, micro-switches, reed switches, magnetic type sensors, mercury ampoule sensors, mechanically operated switches, wireless type orientation sensors or a combination thereof.

## Patentansprüche

1. Vorrichtung (1) zur Erfassung mindestens eines Füllstands (L) eines Fluids (F) eines Tanks, umfassend:
- einen Schwimmkörper (2) mit einer Schwimmachse (X) ;
- eine Vielzahl von Orientierungssensoren (30), die in einer festen Position an dem Schwimmkörper (2) festgespannt sind;
- eine Steuereinheit, die ausgelegt ist, um mit der Vielzahl von Orientierungssensoren (30) zu kommunizieren und eine Betriebsvorrichtung zu steuern, wobei ein jeder Sensor (30) der Vielzahl ausgelegt ist, um ein Signal an die Steuereinheit zu senden, um den Betriebszustand der Betriebsvorrichtung bei einem bestimmten Füllstand (L1, L2, L3, L4) des Fluids (F) zu ändern, der einer bestimmten Neigung (i1, i2, i3, i4) der Achse (X) in Bezug auf den bestimmten Füllstand (L1, L2, L3, L4) entspricht,
- ein Tragmittel (10), das betriebswirksam mit dem Schwimmkörper (2) verbunden ist und ein Scharnier (11) umfasst, wobei das Tragmittel (10) so ausgelegt ist, dass es eine Bewegung des Schwimmkörpers (2) nur in Bezug auf eine einzige Ebene senkrecht zu der Ebene zulässt, die dem Füllstand (L) des Fluids (F) des Tanks entspricht,
wobei der Schwimmkörper (2) an einem Ende einen Verbindungsvorsprung (4) umfasst, der zum stabilen Verbinden und in einer eindeutigen Position des Schwimmkörpers (2) mit dem Tragmittel (10) ausgelegt ist, wobei die vorbestimmte Neigung (i1, i2, i3, i4) der Achse (X), die eine Änderung des Zustands der Sensoren (30) bewirkt, für einen jeden Sensor (30) der Vielzahl unterschiedlich ist.

2. Vorrichtung (1) nach dem vorhergehenden Anspruch, wobei das Tragmittel (10) einen Abschnitt (13) umfasst, der dazu ausgelegt ist, stabil an einem festen Teil des Tanks angebracht zu werden.

3. Vorrichtung (1) nach einem der vorhergehenden Ansprüche, wobei der Vorsprung (4) einen polygonalen Abschnitt aufweist.

4. Vorrichtung (1) nach dem vorhergehenden Anspruch, wobei das Tragmittel (10) Befestigungsmittel (12) umfasst und der polygonale Abschnitt des Vorsprungs (4) zu den Befestigungsmitteln (12) des Tragmittels (10) gegengeformt ist.

5. Vorrichtung (1) nach einem der vorhergehenden Ansprüche, wobei der Schwimmkörper (2) ein visuelles Signalelement (7) umfasst, das die korrekte Position des Körpers (2) selbst in Bezug auf die Ebene angibt, die dem Füllstand (L) des Fluids (F) des Tanks entspricht.

6. Vorrichtung (1) nach einem der vorhergehenden Ansprüche, ferner umfassend einen Träger (3), der fest in dem Schwimmkörper (2) angeordnet ist und an dem die Sensoren (30) fixiert sind.

7. Vorrichtung (1) nach einem der vorhergehenden Ansprüche, wobei der Träger (3) eine Leiterplatte umfasst, die die elektrischen Verbindungen eines jeden der Sensoren (30) umfasst.

8. Vorrichtung (1) nach Anspruch 6, wobei der Träger (3) an einem seiner Enden Kopplungsmittel (5) umfasst und der Schwimmkörper (2) Fixierungsmittel (6) umfasst, wobei die Kopplungsmittel (5) mit den Fixierungsmitteln (6) betriebswirksam verbunden sind und dazu ausgelegt sind, den Träger (3) in einer vorbestimmten und einzigartigen Position in Bezug auf den Schwimmkörper (2) zu fixieren.

9. Vorrichtung nach einem der vorhergehenden Ansprüche, **dadurch gekennzeichnet, dass** die Orientierungssensoren (30) der Vielzahl aus der Gruppe ausgewählt sind, die Neigungsschalter, Mikroschalter, Reedschalter, Sensoren vom magnetischen Typ, Quecksilberampullensensoren, mechanisch betätigte Schalter, Orientierungssensoren vom drahtlosen Typ oder eine Kombination davon umfasst.

## Revendications

1. Dispositif (1) de détection d'au moins un niveau (L) d'un fluide (F) d'un réservoir, comprenant :
- un corps flottant (2) ayant un axe flottant (X) ;
- une pluralité de capteurs d'orientation (30) contraints dans une position fixe audit corps flottant (2) ;
- une unité de commande configurée pour communiquer avec ladite pluralité de capteurs d'orientation (30) et pour commander un dispositif de fonctionnement, dans lequel chaque capteur (30) de ladite pluralité est configuré pour envoyer un signal à ladite unité de commande pour changer l'état de fonctionnement dudit dispositif de fonctionnement à un certain niveau (L1, L2, L3, L4) dudit fluide (F) correspondant à une inclinaison déterminée (i1, i2, i3, i4) dudit axe (X) par rapport audit certain niveau (L1, L2, L3, L4),
- un moyen de support (10) fonctionnellement relié audit corps flottant (2) et comprenant une charnière (11), ledit moyen de support (10) étant configuré pour permettre le mouvement dudit corps flottant (2) uniquement par rapport à un seul plan perpendiculaire au plan correspondant audit niveau (L) dudit fluide (F) dudit réservoir,
ledit corps flottant (2) comprenant à une extrémité une saillie de connexion (4) configurée pour connecter de manière stable et dans une position unique ledit corps flottant (2) audit moyen de support (10), dans lequel ladite inclinaison prédéterminée (i1, i2, i3, i4) dudit axe (X), déterminant un changement de l'état desdits capteurs (30), est différente pour chaque capteur (30) de ladite pluralité.

2. Dispositif (1) selon la revendication précédente, dans lequel ledit moyen de support (10) comprend une partie (13) configurée pour se fixer de manière stable à une partie fixe dudit réservoir.

3. Dispositif (1) selon l'une quelconque des revendications précédentes, dans lequel ladite saillie (4) a une section polygonale.

4. Dispositif (1) selon la revendication précédente, dans lequel ledit moyen de support (10) comprend des moyens de fixation (12) et ladite section polygonale de ladite saillie (4) est de forme opposée auxdits moyens de fixation (12) dudit moyen de support (10).

5. Dispositif (1) selon l'une quelconque des revendications précédentes, dans lequel ledit corps flottant (2) comprend un élément de signalisation visuelle (7), indiquant la position correcte dudit corps (2) lui-même par rapport audit plan correspondant audit niveau (L) dudit fluide (F) dudit réservoir.

6. Dispositif (1) selon l'une quelconque des revendications précédentes, comprenant en outre un support (3) disposé de manière fixe à l'intérieur dudit corps flottant (2) et sur lequel lesdits capteurs (30) sont fixés.

7. Dispositif (1) selon l'une quelconque des revendications précédentes, dans lequel ledit support (3) comprend une carte de circuit imprimé comprenant les connexions électriques de chacun desdits capteurs (30).

8. Dispositif (1) selon la revendication 6, dans lequel ledit support (3) comprend sur une de ses extrémités des moyens de couplage (5) et ledit corps flottant (2) comprend des moyens de fixation (6), lesdits moyens de couplage (5) étant connectés de manière opérationnelle auxdits moyens de fixation (6) et étant configurés pour fixer ledit support (3) dans une position prédéterminée et unique par rapport audit corps flottant (2).

9. Dispositif selon l'une quelconque des revendications précédentes, **caractérisé en ce que** lesdits capteurs d'orientation (30) de ladite pluralité sont sélectionnés dans le groupe comprenant des commutateurs d'inclinaison, des microrupteurs, des commutateurs à lames, des capteurs de type magnétique, des capteurs à ampoule à mercure, des commutateurs à commande mécanique, des capteurs d'orientation de type sans fil ou une combinaison de ceux-ci.
